# EUROPÄISCHE PATENTSCHRIFT

(11) **EP 0 461 215 B1**
(45) Veröffentlichungstag und Bekanntmachung des Hinweises auf die Patenterteilung: **18.05.1994**
(21) Anmeldenummer: 91900147.9
(22) Anmeldetag: 21.12.1990
(51) Int. Cl.: B32B 11/04, B32B 3/16, B60R 13/08

(54) **SCHALLDÄMPFENDES VERBUNDWERK**
NOISE-DAMPING COMBINATION
ISOLANT PHONIQUE EN MATERIAUX COMPOSITES

(30) Priorität: 29.12.1989 CH 4683/89
(43) Veröffentlichungstag der Anmeldung: 18.12.1991
(73) Patentinhaber: MATEC HOLDING AG, CH-8700 Küsnacht (CH)
(72) Erfinder: ALTS, Thorsten, D-6101 Gross-Bieberau (DE)
(74) Vertreter: Seifert, Helmut E.
(86) Internationale Anmeldenummer: CH9000291
(87) Internationale Veröffentlichungsnummer: WO9109728

(56) Entgegenhaltungen:
- EP-A- 0 255 332
- DE-U- 8 201 511

## Beschreibung

Die vorliegende Erfindung betrifft ein schalldämpfendes Verbundwerk zur Lärmreduktion, mit mindestens einem schwingfähigen Bauteil vorzugsweise aus Blech oder Kunststoff und einer schwingungsdämpfenden Dämpfungsfolie, sowie eine für die Verwendung in diesem Verbundwerk besonders geeignete schwingungsdämpfende Dämpfungsfolie.

Solche schalldämpfenden Verbundwerke finden sich im wesentlichen im Automobilbau, wo Bodenbleche, Stirnwände, Türen, Dächer usw. mit Dämpfungsfolien beschichtet werden, um den von diesem Karosserieteil erzeugten Lärmpegel zu reduzieren (siehe, z.B., die Schrift DE-U-8201511). Massnahmen zur Reduktion von Schallimmissionen sind von besonderer Bedeutung, da die durch Lärm auftretenden Beeinträchtigungen anerkanntermassen zu subjektivem Unwohlsein, beispielsweise Kopfschmerzen, Herzklopfen oder erhöhtem Blutdruck führen. Es ist deshalb das Bestreben der modernen Automobilindustrie, den Geräuschpegel der Fahrzeuge so weit wie möglich zu reduzieren.

Die bekannten Massnahmen zur Reduktion des von vibrierenden Bau- oder Karosserieteilen erzeugten Lärmpegels beschränken sich auf Versteifungen und Dämpfung der fraglichen Bau- oder Karosserieteile und auf zusätzliche Massnahmen zur Schallisolation. So bestehen bekannte schalldämpfende Verbundwerke im wesentlichen aus einem Karosserieteil und einer darauf aufgeklebten bzw. aufgeschmolzenen biegesteifen, verlustbehafteten Dämpfungsfolie, auf welche üblicherweise wiederum schallisolierende Schichten, sowie eine Dekor- oder Teppichlage aufgebracht sind. Die dabei verwendeten biegesteifen Dämpfungsfolien sind jedem Fachmann unter den verschiedensten Handelsnamen bekannt, beispielsweise Bitumenfolie X999/3-UKN.

Diese biegesteifen Dämpfungsfolien weisen verschiedene für ihre Verwendung nachteilige Eigenschaften auf. Einerseits bedingt die Applikation der verschiedenen zugeschnittenen Folien viel Platz in der Fertigungslinie und beansprucht eine aufwendige Logistik. Andererseits neigen diese Dämpfungsfolien dazu, beim Zuschneiden und bei der Verarbeitung abzubröckeln und Krümel zu bilden. Diese Krümel verschmutzen jedoch die bei der Fertigung von Fahrzeugen verwendeten Tauchbäder, insbesondere Farbbäder, in untolerierbarer Weise und machen zusätzliche Reinigungsmassnahmen erforderlich, welche die Herstellungskosten zusätzlich erhöhen.

Ein weiterer wesentlicher Nachteil dieser biegesteifen Dämpfungsfolien liegt auch in ihren temperaturabhängigen Materialeigenschaften.

Es ist deshalb die Aufgabe der vorliegenden Erfindung, ein schalldämpfendes Verbundwerk zu schaffen, welches die technischen Mängel der bekannten Verbundwerke nicht aufweist.

Insbesondere soll ein schalldämpfendes Verbundwerk geschaffen werden, dessen Schalldämpfungswirksamkeit gegenüber den herkömmlichen Verbundwerken verbessert ist, eine kostengünstige Montage ohne Verschmutzung der bei der Fertigung von Fahrzeugen verwendeten Tauchbäder erlaubt und auch nach längerem Gebrauch keine wesentlichen Ermüdungs- und Verschleisserscheinungen aufweist, d.h. seine Schalldämpfungswirksamkeit unvermindert beibehält.

Darüberhinaus wird den Forderungen der Industriegesellschaft nach Wiederverwendbarkeit (Recycling) Rechnung getragen. Insbesondere lässt sich das vorliegende Verbundwerk äusserst einfach demontieren.

Erfindungsgemäss wird diese Aufgabe mit einem schalldämpfenden Verbundwerk der eingangs genannten Art gelöst, welches dadurch gekennzeichnet ist, dass die schwingungsdämpfende Dämpfungsfolie mindestens aus einer biegeweichen Schwerfolie und einer damit fest verbundenen visko-elastischen Auflage-Lage besteht, welche Auflage-Lage eine Vielzahl kantig strukturierte Auflageelemente umfasst,
- die Dämpfungsfolie mit ihrer Auflage-Lage lose auf dem schwingfähigen Bauteil aufliegt,
- und die einzelnen Auflageelemente derart geformt und angeordnet sind, dass sie zusammen mit dem schwingfähigen Bauteil und der biegeweichen Schwerfolie ein zusammenhängendes Hohlraumlabyrinth mit akustisch wirksamen Kavitäten bilden.

Es hat sich gezeigt, dass das erfindungsgemässe Verbundwerk ein gegenüber den bekannten schalldämpfenden Verbundwerken erheblich verbessertes Dämpfungsverhalten aufweist, insbesondere in den im Automobilbau störenden Frequenzbereichen. Damit können die akustischen Eigenschaften des schalldämpfenden Verbundwerks wesentlich verbessert werden, ohne die Dicke der Dämpfungsfolie weiter zu erhöhen, bzw. das Flächengewicht des Verbundwerks zu vergrössern.

Ein wesentlicher Vorteil des erfindungsgemässen Verbundwerks liegt in seiner Herstellung bei der Verwendung im Automobilbau. Da die schalldämpfende Dämpfungsfolie für das vorliegende Verbundwerk nicht aufgeklebt oder aufgeschmolzen wird, kann diese ins Fahrzeug eingelegt werden, nachdem die Fahrzeugkarosserie ins Tauchbad getaucht und im Ofen getrocknet worden ist. Damit wird vermieden, dass Krümel der Dämpfungsfolie das Tauchbad verschmutzen. Insbesondere kann die Folie auch in dem schallisolierenden Aufbau integriet sein, wodurch der Arbeitsgang des Einlegens der Folie entfällt.

Ein weiterer wesentlicher Vorteil des erfindungsgemässen Verbundwerks ergibt sich aus der Verwendung einer biegeweichen Schwerfolie, welche die erwünschten akustischen Wirkungen in einem wesentlich breiteren Temperaturintervall aufweist als herkömmliche biegesteife Bitumen-Folien. Ausserdem wird durch das beabstandete Auflegen der Schwerfolie die Temperaturkopplung zwischen dem Karosserieteil und der Schwerfolie verringert, was die Wirksamkeit des Verbundwerks auch bei extremen Temperaturen weiter verbessert.

Die verbesserte Wirksamkeit des erfindungsgemässen Verbundwerks ist für den Fachmann insofern überraschend, als einerseits der Materialverlustfaktor einer biegeweichen Schwerfolie kleiner ist als bei biegesteifen Materialien und andererseits durch blosses Auflegen der Dämpfungsfolie das Verbundwerk, gegenüber den Verbundwerken mit aufgeklebter oder aufgeschmolzener Dämpfungsfolie, keine relevante Versteifung aufweist.

Die deutlich verbesserte akustische Dämpfungswirksamkeit liegt wesentlich im Verhalten der Grenzschicht zwischen Dämpfungsfolie und schwingendem Bau- oder Karosserieteil. Einerseits sorgt die äussere Reibung an dieser Grenzschicht (durch Umwandlung von Schwingungsenergie in Wärme) für offenbar höhere Energieverluste als bei den üblichen verklebten bzw. verschmolzenen Verbundwerken, andererseits können die Dämpfungsfolie und das Bau- oder Karosserieteil mindestens in Teilbereichen auch gegenläufig frei schwingen und ermöglichen somit einen mechanischen Impulsaustausch mit äusserst wirksamem Dämpfungseffekt.

Wesentlich für die Verbesserung des Verlustmechanismus ist die kantig-strukturierte Auflage-Lage, welche einerseits durch die Ausgestaltung der leicht verformbaren Auflageelemente die Materialverluste der Dämpfungsfolie durch vergrösserte Deformationen in diesen Elementen in verbesserter Weise anspricht und andererseits durch die besondere Anordnung dieser Auflageelemente ein zusammenhängendes Hohlraumlabyrinth mit akustisch wirksamen Kavitäten bildet, welche die Reibungs- und Reflexionsverluste der hin- und herschwingenden Luft drastisch erhöhen.

In einer bevorzugten Ausführungsform haben diese Auflageelemente ein sternförmiges Profil und sind so angeordnet, dass sich dreieckförmige Kavitäten bilden.

In einer anderen Ausführungsform sind die Auflageelemente derart ausgeformt und angeordnet, dass sich kreisförmige Kavitäten bilden.

Weitere bevorzugte Ausführungsformen und Merkmale des erfindungsgemässen Verbundwerks ergeben sich aus den Ansprüchen.

Nachfolgend soll die Erfindung anhand eines Ausführungsbeispiels und mit Hilfe der Figuren näher erläutert werden. Es zeigen:
- Fig. 1: einen Querschnitt durch ein erfindungsgemässes Verbundwerk,
- Fig. 2: eine besondere Anordnung und Ausformung von Auflageelementen in der Auflage-Lage des erfindungsgemässen Verbundwerks,
- Fig. 3: eine bevorzugte Anordnung und Ausformung von Auflage-Elementen in der Auflage-Lage des erfindungsgemässen Verbundwerks.

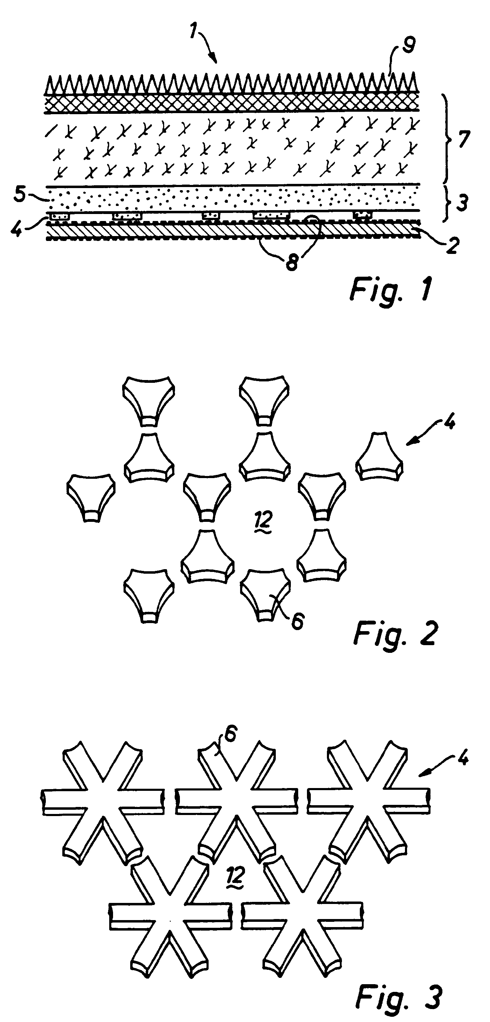

Das in Fig. 1 dargestellte Verbundwerk 1 umfasst ein schwingfähiges Bauteil 2, auf welchem die schwingungsdämpfende Dämpfungsfolie 3 aufgelegt ist. Dabei ist es für die Erfindung unwesentlich, ob das Bauteil 2 aus Blech oder Kunststoff gefertigt ist. Als Dämpfungsfolie 3 kann jedes in der Fahrzeugindustrie üblicherweise verwendete Schwerschichtmaterial verwendet werden. Dem Fachmann auf diesem Gebiet sind eine Vielzahl solcher Produkte bekannt. In einer erprobten Ausführungsform des erfindungsgemässen Verbundwerks wird eine Ethylen- Propylen- Dien Monomer- (EPDM-) Folie als Dämpfungsfolie verwendet. Ueblicherweise weisen diese Dämpfungsfolien eine Dicke von 3 bis 6 mm auf.

Die für das vorliegende Verbundwerk verwendete Dämpfungsfolie 3 besteht erfindungsgemäss aus einer biegeweichen Schwerfolie 5 und einer damit fest verbundenen Auflage-Lage 4. Unter einer biegeweichen Schwerfolie soll im folgenden eine Folie verstanden werden, deren Biegesteifigkeit bei Raumtemperatur wesentlich kleiner ist als diejenige einer Bitumenfolie mit grossem E-Modul, insbesondere ist bei Zimmertemperatur (ca. 23°) der statische Biegewiderstand pro Einheit der Querschnittsfläche und pro Einheit des Biegewinkels um etwa einen Faktor 4 - 6 kleiner als bei den üblicherweise verwendeten biegesteifen Dämfpungsfolien.

Die mit der biegeweichen Schwerfolie 5 fest verbundene Auflage-Lage 4 setzt sich aus einer Vielzahl Auflageelemente 6 zusammen. Diese Auflageelemente 6 können aus irgendeinem Material bestehen, welches einerseits einen hohen Gleitreibungskoeffizienten und andererseits einen hohen Verlustfaktor aufweist, um eine befriedigende akustische Wirksamkeit durch direkte Reibungsverluste und durch visko-elastische Deformationsverluste zu erzielen. Diese Auflageelemente 6 können direkt aufgeklebt oder mit Hilfe einer Trägerfolie an der Schwerfolie befestigt oder durch Prägung direkt in die Schwerfolie eingeprägt werden. In einer erprobten Ausführungsform wurde eine 6 mm dicke biegeweiche Schwerfolie so geprägt, dass diese Auflageelemente 6 als ungeprägte Teilbereiche bestehen blieben und eine Dicke von 1 bis 2 mm aufwiesen.

In einer weiteren Ausgestaltung des erfindungsgemässen Verbundwerks ist auf der Schwerfolie 5 eine schallisolierende Schicht 7 aufgebracht. Solche schallisolierenden Schichten 7 sind dem Fachmann bekannt und können beispielsweise eine als Masse-Feder-System funktionierende Sandwich-Struktur aufweisen. In der Regel weisen diese schallisolierenden Schichten eine Dicke von ca. 20 mm auf.

Ueber der schallisolierenden Schicht 7 liegt insbesondere auch eine Dekor- oder Teppichschicht, wie sie in der Automobilindustrie üblich ist.

Für besondere Anwendungen, beispielsweise als Bodenbelag im Bausektor mit hoher lokaler Belastbarkeit (Teppichfliesen, PVC- oder andere Beläge) kann die schallisolierende Schicht aus Hartschaum oder verdichteten textilen oder mineralischen Vliesen bestehen oder ganz entfallen.

Ein derart aufgebautes Verbundwerk dämpft gleichzeitig sowohl die senkrecht zum Bauteil stehenden Schwingungskomponenten, im folgenden als Normalkomponenten bezeichnet, als auch die parallel zum Bauteil stehenden Schwingungskomponenten, im folgenden als Transversalkomponenten bezeichnet. Die direkt von dem Bauteil 2 auf die Dämpfungsfolie 3 übertragenen Normalkomponenten verursachen innere Deformationen und Biegeschwingungen der Folie, deren hoher Verlustfaktor wesentlich zur Dämpfung beiträgt. Dadurch, dass die Dämpfungsfolie 3 nur lose auf dem Bauteil 2 aufliegt, wird es der Folie ermöglicht, sich unter Umständen teilweise von dem Bauteil 2 abzuheben und beim Zurückfallen das Bauteil 2 mit einem entgegengerichteten Impulsstoss stark zu dämpfen.

Ein weiterer schalldämpfender Mechanismus zeigt sich bei Vibrationen in transversaler Richtung und besteht hauptsächlich in Scherdeformationen bei Biegeschwingungen. Diese Vibrationen deformieren die einzelnen stegförmigen Auflageelemente 6, wodurch wiederum Bewegungsenergie in Deformationsenergie umgewandelt wird. Dabei erweist es sich als wesentlich, dass die einzelnen Auflageelemente 6 kantig strukturiert sind, um damit erhöhte visko-elastische Verluste in den Bereichen der einzelnen Kanten zu erzielen.

Eine wesentliche Dämpfungswirkung wird aber durch die äussere Reibung zwischen der Auflage-Lage 4 und dem Bauteil 2 bewirkt, welche Reibung die Schwingungsenergie unmittelbar in Reibungswärme umwandelt und somit dem schwingenden System entzieht.

Das erfindungsgemässe Verbundwerk schenkt den dissipativen Mechanismen in der Grenzschicht und Auflage-Lage erhöhte Aufmerksamkeit. Insbesondere wird auch ein Grossteil der Schwingungsenergie der zwischen dem Bauteil 2 und der biegeweichen Schwerfolie 5 schwingenden Luft vernichtet. Dazu sind die Auflageelemente 6 in besonderer Art und Weise geformt und angeordnet. Insbesondere bilden die Auflageelemente 6 zusammen mit dem Bauteil 2 und der Schwerfolie 5 ein Hohlraumlabyrinth, welches es der schwingenden Luft erlaubt, sich in transversaler Richtung über die ganze schwingfähige Fläche zu bewegen. Dabei verliert die schwingende Luft insbesondere durch Reibungs- und Reflexionsverluste in erhöhtem Mass Schallenergie. Wesentlich für die vorliegende Erfindung sind die durch die besondere Ausformung und Anordnung der Auflageelemente 6 gebildeten Kavitäten 12. Diese offenen Kavitäten sind derart dimensioniert, dass die für den Automobilbau relevanten Schallfrequenzen optimal resorbiert werden. Die schalldämpfenden Wirkungen dieser Hohlräume erweisen sich als überraschend hoch.

Fig. 2 und 3 zeigen Ausformungen und Anordnungen von erprobten Auflageelementen 6, welche in ihrer Gesamtheit die Auflage-Lage 4 bilden. In den erprobten Ausführungsformen weisen die akustisch wirksamen Kavitäten 12 eine Grundfläche von ca. 1 bzw. 5 cm² auf und haben eine Höhe von ca. 1 mm. Dabei ist es aus den oben näher erläuterten Gründen wichtig, dass die einzelnen Kavitäten 12 untereinander direkt und/ oder indirekt verbunden sind. Diese Verbindungsöffnungen weisen in der in Fig. 2 gezeigten Konfiguration mit kreisförmiger Grundfläche eine lichte Weite von ca. 3 mm auf und eine Länge von 5 mm.

Bei der in Fig. 3 dargestellten Konfiguration der Auflageelemente zeigt sich, dass bei normalen Temperaturen von 23°C und einer für den Automobilbau charakteristischen Eigenfrequenz des Bodenblechs von ca. 130 Hz, die Dämpfungskonstante für das Abklingen der Plattenschwingung um bis zu einem Faktor 2 besser war als für eine vergleichbare unstrukturierte Bitumenfolie. Die Seitenlängen dieser dreieckförmigen Kavitäten betragen in dieser Ausführungsform ca. 2 cm, während die Breite der einzelnen Stege dieser sternförmigen Auflageelemente 6 etwa 5 mm beträgt.

Es versteht sich von selbst, dass andere Dimensionierungen der vorliegenden Auflageelemente 4 und/oder deren Konfigurationen vom Fachmann ohne erfinderisches Zutun vorgenommen werden können, um das Verbundwerk an den jeweiligen Verwendungszweck optimal anpassen zu können. Inbesondere sind für den Fachmann auch Auflage-Lagen 4 denkbar, bei welchen die Auflageelemente 6 aus verschiedenen Materialien bestehen können und insbesondere unterschiedliche Dichte aufweisen können. Es versteht sich von selbst, dass auch Massnahmen zur Erhöhung des Reibungskoeffizienten zwischen Auflage-Lage 4 und Bauteil 2 im allgemeinen technischen Können des Fachmanns liegen.

Der vorliegende Erfindungsgegenstand und damit alle im gewöhnlichen Handeln des Fachmanns liegenden Modifikationen desselben zeichnen sich durch die Kombination der beanspruchten Merkmale und durch die dadurch erzielte akustische Wirksamkeit aus.

Das oben beschriebene schalldämpfende Verbundwerk kann an Motorfahrzeugen jeder Art ebenso verwendet werden, wie an Bau- oder Industriemaschinen, deren Lärmpegel untolerierbare Werte aufweisen.

Das schalldämpfende Verbundwerk kann aber auch im Baubereich als schalldämpfender Bodenbelag verwendet werden. Bei besonderen Anforderungen an die lokale Belastbarkeit kann die Federschicht durch einen Hartschaum oder verdichtete textile oder mineralische Vliese ersetzt werden oder ganz entfallen. Man erreicht damit eine verbesserte Trittschalldämmung und durch teilweise Abkopplung von der Gebäudedecke eine Verminderung der Schallübertragung in benachbarte oder darunterliegende Räume.

Schliesslich kann die Dämpfungsfolie 3 des schalldämpfenden Verbundwerkes 1 als effektiver Schwingungsdämpfer für hohe Flächenpressungen ausgelegt werden. Man hat dazu die Stege der Auflage-Lage 4 und die Schwerfolie 5 aus gefüllten Elastomeren (Gummi) herzustellen und zur Erhöhung der flächenspezifischen Belastbarkeit die Schwerfolie 5 mit Langfasern (Stahl-, Kevlar-, Glas-, Kohlefasern etc.) einschichtig oder mehrschichtig im rechtwinkligen oder schiefwinkligen Kreuzverbund zu verstärken. Verstärkung durch Kurzfasern mit statistischer Richtungsverteilung in der Ebene der Schwerfolie erhöht ebenfalls die flächenspezifische Belastbarkeit. Solche faserverstärkten Schwerfolien mit einseitigen oder beidseitigen offenen Stegstrukturen gemäss Fig. 2 und Fig. 3 gestatten Stauchdeformationen in Dickenrichtung und Scherdeformationen, d.h. Stegstauchungen, in der Schichtebene. Biegedeformationen hingegen sind nur bei erheblichen Biegemomenten möglich. Diese faserverstärkten Schwerfolien resp. Dämpfungsschichten mit offenen Stegstrukturen an einer oder an beiden Oberflächen besitzen ein wesentlich verbessertes Dämpfungsverhalten bei Stauch- und Scherschwingungen, als gleich dicke Schichten mit kompakter Oberfläche. Sie sind deshalb als effektive Schwingungsdämpfer mit hoher Flächenpressung im Baubereich zur Unterbrechung von Körperschall-Ausbreitungswegen einsetzbar.

Durch Aufbringen solcher Dämpfungsschichten an Mauerwerk erzielt man eine wirksame akustische Entkopplung von Gebäudeteilen bei gleichzeitiger machanischer Belastbarkeit und Dauerstauchfestigkeit.

## Patentansprüche

1. Schalldämpfendes Verbundwerk (1) zur Lärmreduktion, mit mindestens einem schwingfähigen Bauteil (2) vorzugsweise aus Blech oder Kunststoff und einer schwingungsdämpfenden Dämpfungsfolie (3), dadurch gekennzeichnet, dass
- die schwingungsdämpfende Dämpfungsfolie (3) mindestens aus einer biegeweichen Schwerfolie (5) und einer damit fest verbundenen visko-elastischen Auflage-Lage (4) besteht, welche Auflage-Lage (4) eine Vielzahl kantig strukturierte Auflageelemente (6) umfasst,
- die Dämpfungsfolie (3) mit ihrer Auflage-Lage (4) lose auf dem schwingfähigen Bauteil (2) aufliegt,
- und die einzelnen Auflageelemente (6) derart geformt und angeordnet sind, dass sie zusammen mit dem schwingfähigen Bauteil (2) und der biegeweichen Schwerfolie (5) ein zusammenhängendes Hohlraumlabyrinth mit akustisch wirksamen Kavitäten (12) bilden.

2. Schalldämpfendes Verbundwerk nach Anspruch 1, dadurch gekennzeichnet, dass das schwingfähige Bauteil (2) mit einem Schutz- bzw. Farbbelag (8) versehen ist.

3. Schalldämpfendes Verbundwerk nach einem der Ansprüche 1, 2, dadurch gekennzeichnet, dass die Auflage-Lage (4) und die Schwerfolie (5) aus dem gleichen Material bestehen.

4. Schalldämpfendes Verbundwerk (1) nach Anspruch 3, dadurch gekennzeichnet, dass die schwingungsdämpfende Dämpfungsfolie (3) einstückig ausgebildet ist und insbesondere die Auflage-Lage (4) in die Dämpfungsfolie eingeprägt ist.

5. Schalldämpfendes Verbundwerk (1) nach Anspruch 4, dadurch gekennzeichnet, dass die Dämpfungsfolie (3) eine hochgefüllte Schwerfolie ist, welche insbesondere Thermoplaste, Elastomere und Weichmacherzuschläge enthalten kann.

6. Schalldämpfendes Verbundwerk (1) nach einem der Ansprüche 1 bis 5, dadurch gekennzeichnet, dass das Verbundwerk (1) weitere, auf der Schwerfolie (5) liegende schallisolierende Schichten (7) umfasst.

7. Schwingungsdämpfende Dämpfungsfolie (3) für ein schalldämpfendes Verbundwerk (1) nach Anspruch 1, dadurch gekennzeichnet, dass die Dämpfungsfolie (3) aus einer biegeweichen Schwerfolie (5) und einer damit fest verbundenen visko-elastischen Auflage-Lage (4) besteht, welche Auflage-Lage (4) eine Vielzahl kantig strukturierte Auflageelemente (6) umfasst, und die einzelnen Auflageelemente (6) derart geformt und angeordnet sind, dass sie zusammen mit einem schwingfähigen Bauteil (2) und der biegeweichen Schwerfolie (5) ein zusammenhängendes Hohlraumlabyrinth mit akustisch wirksamen Kavitäten (12) bilden können.

8. Schwingungsdämpfende Dämpfungsfolie (3) nach Anspruch 7, dadurch gekennzeichnet, dass die Dämpfungsfolie einstückig ausgebildet ist und insbesondere die Auflage-Lage (4) in die Dämpfungsfolie eingeprägt ist.

9. Schwingungsdämpfende Dämpfungsfolie (3) nach Anspruch 8, dadurch gekennzeichnet, dass die Auflageelemente (6) derart geformt sind, dass die akustisch wirksamen Kavitäten eine Grundfläche von 1 bis 5 cm² und eine Höhe von 0,1 bis 3,0 mm aufweisen.

10. Schwingungsdämpfende Dämpfungsfolie (3) nach Anspruch 9, dadurch gekennzeichnet, dass die Dämpfungsfolie (3) eine hochgefüllte Schwerfolie ist, welche insbesondere Thermoplaste, Elastomere und Weichmacherzuschläge enthält.

11. Schwingungsdämpfende Dämpfungsfolie (3) nach Anspruch 1, dadurch gekennzeichnet, dass die Dämpfungsfolie (3) eine faserverstärkte Schwerfolie ist.

## Claims

1. Sound-absorbing laminate (1) for noise reduction, having at least one part (2) capable of vibrating, preferably comprising sheet metal or plastic, and one vibration-damping absorbing film (3), characterized in that
- the vibration-damping absorbing film (3) consists at least of a flexible heavy film (5) and a viscoelastic support layer (4) firmly bonded thereto, which support layer (4) comprises a large number of support elements (6) having an angular structure,
- the absorbing film (3) with its support layer (4) is placed loosely on the part (2) capable of vibrating,
- and the individual support elements (6) are shaped and arranged in such a way that, together with the part (2) capable of vibrating and the flexible heavy film (5), they form a cohesive cavity labyrinth having acoustically effective cavities (12).

2. Sound-absorbing laminate according to Claim 1, characterized in that the part (2) capable of vibrating is provided with a protective or coloured covering (8).

3. Sound-absorbing laminate according to Claim 1 or 2, characterized in that the support layer (4) and the heavy film (5) consist of the same material.

4. Sound-absorbing laminate (1) according to Claim 3, characterized in that the vibration-damping absorbing film (3) is formed in one piece and in particular the support layer (4) is embossed in the absorbing film.

5. Sound-absorbing laminate (1) according to Claim 4, characterized in that the absorbing film (3) is a heavy film which has a high filler content and may contain in particular thermoplastics, elastomers and added plasticizers.

6. Sound-absorbing laminate (1) as claimed in any of Claims 1 to 5, characterized in that the laminate (1) comprises further sound-insulating layers (7) lying on the heavy film (5).

7. Vibration-damping absorbing film (3) for a sound-absorbing laminate (1) as claimed in Claim 1, characterized in that the absorbing film (3) consists of a flexible heavy film (5) and a viscoelastic support layer (4) firmly bonded thereto, which support layer (4) has a large number of support elements (6) having an angular structure, and the individual support elements (6) are shaped and arranged in such a way that, together with a part (2) capable of vibrating and the flexible heavy film (5), they may form a cohesive cavity labyrinth having acoustically effective cavities (12).

8. Vibration-damping absorbing film (3) according to Claim 7, characterized in that the absorbing film is formed in one piece and in particular the support layer (4) is embossed in the absorbing film.

9. Vibration-damping absorbing film (3) according to Claim 8, characterized in that the support elements (6) are shaped in such a way that the acoustically effective cavities have a base area of 1 to 5 cm² and a height of 0.1 to 3.0 mm.

10. Vibration-damping absorbing film (3) according to Claim 9, characterized in that the absorbing film (3) is a heavy film which has a high filler content and contains in particular thermoplastics, elastomers and added plasticizers.

11. Vibration-damping absorbing film (3) according to Claim 1, characterized in that the absorbing film (3) is a fibre-reinforced heavy film.

## Revendications

1. Matériau composite (1) insonorisant pour la réduction de bruit, avec au moins un élément de construction (2) susceptible de pouvoir vibrer, de préférence en tôle ou en matière plastique, et une feuille amortissante de vibrations (3), caractérisé en ce que
- la feuille amortissante de vibrations (3) est constituée d'au moins une feuille (5) lourde souple fixement reliée à une feuille de revêtement (4) visco-élastique, laquelle feuille de revêtement (4) comprenant une multitude d'éléments de revêtement de structure anguleuse,
- la feuille amortissante (3) repose avec sa feuille de revêtement (4) de manière lâche sur l'élément vibrant (2),
- et les éléments de revêtement individuels (6) sont conformés et disposés de telle sorte qu'ils constituent avec l'élément vibrant (2) et la feuille (5) lourde souple une structure liée en forme de labyrinthe creux avec des cavités (12) acoustiquement efficaces.

2. Matériau composite selon la revendication 1, caractérisé en ce que l'élément de construction (2) susceptible de pouvoir vibrer est pourvu d'un revêtement (8) de protection, respectivement d'une couche de peinture.

3. Matériau composite selon l'une des revendications 1 ou 2, caractérisé en ce que la feuille de revêtement (4) et la feuille lourde (5) sont réalisées dans le même matériau.

4. Matériau composite (1) selon la revendication 3, caractérisé en ce que la feuille amortissante de vibration (3) est faite d'une seule pièce et que la feuille de revêtement (4) est en particulier estampée dans la feuille amortissante.

5. Matériau composite (1) selon la revendication 4, caractérisé en ce que la feuille amortissante (3) est une feuille lourde dense, qui peut comprendre en particulier des thermoplatiques, des elastomères et des additifs plastifiants.

6. Matériau composite (1) selon l'une des revendications 1 à 5, caractérisé en ce que le matériau composite (1) comprend d'autres couches insonorisantes (7) reposant sur la feuille lourde (5).

7. Feuille amortissante de vibrations (3) pour un matériau composite (1) selon la revendication 1, caractérisée en ce que la feuille amortissante (3) est constituée d'une feuille (5) lourde souple fixement reliée à une feuille de revêtement (4) visco-élastique, laquelle feuille de revêtement (4) comprenant une multitude d'éléments de revêtement de structure anguleuse, et que les éléments de revêtement individuels (6) sont conformés et disposés de telle sorte qu'ils peuvent constituer avec l'élément vibrant (2) et la feuille (5) lourde souple une structure liée en forme de labyrinthe creux avec des cavités (12) acoustiquement efficaces.

8. Feuille amortissante de vibrations (3) selon la revendication 7, caractérisée en ce que la feuille amortissante est faite d'une seule pièce et que la feuille de revêtement (4) est en particulier estampée dans la feuille amortissante.

9. Feuille amortissante de vibrations (3) selon la revendication 8, caractérisée en ce que les éléments de revêtement (6) présentent une forme telle que les cavités acoustiquement efficaces possèdent une surface de 1 à 5 cm², et une hauteur de 0,1 à 3 mm.

10. Feuille amortissante de vibrations (3) selon la revendication 9, caractérisée en ce que la feuille amortissante (3) est une feuille lourde, dense, qui peut comprendre en particulier des thermoplatiques, des elastomères et des additifs plastifiants.

11. Feuille amortissante de vibrations (3) selon la revendication 1, caractérisée en ce que la feuille amortissante (3) est une feuille lourde renforcée par des fibres.
